# EUROPÄISCHE PATENTSCHRIFT

(11) **EP 4 243 954 B1**
(45) Veröffentlichungstag und Bekanntmachung des Hinweises auf die Patenterteilung: **28.01.2026**
(21) Anmeldenummer: 21805646.3
(22) Anmeldetag: 28.10.2021
(51) Int. Cl.: B01D 29/33, B01D 29/39, B01D 29/66, B01D 46/02, B01D 46/24

(54) **FILTERELEMENT ZUR ABTRENNUNG VON FESTSTOFFEN AUS FLÜSSIGKEITEN UND GASEN**
FILTER ELEMENT FOR SEPARATING SOLIDS FROM LIQUIDS AND GASES
ÉLÉMENT FILTRANT POUR SÉPARER DES SOLIDES DE LIQUIDES ET DE GAZ

(30) Priorität: 16.11.2020 CH 14602020
(43) Veröffentlichungstag der Anmeldung: 20.09.2023
(73) Patentinhaber: DrM, Dr. Müller AG, 8708 Männedorf (CH)
(72) Erfinder: SCHUMACHER, Ivo, 8753 Mollis (CH); MOSER, Urs, 8712 Stäfa (CH); RÜEGG, Philipp, 8623 Wetzikon (CH)
(74) Vertreter: Prins Intellectual Property AG
(86) Internationale Anmeldenummer: PCT/IB2021/059953
(87) Internationale Veröffentlichungsnummer: WO 2022/101731

(56) Entgegenhaltungen:
- EP-B1- 2 736 619
- CA-A- 646 598

## Beschreibung

Die Erfindung betrifft ein Filterelement zur Abtrennung von Feststoffen aus Flüssigkeiten und Gasen mit zwei perforierten Platten, welche parallel zueinander angeordnet sind und einen Zwischenraum zwischen den zwei Platten bilden, und welche von einer Filterhülle umhüllt sind, sowie eine Vorrichtung zur Abtrennung von Feststoffen aus Flüssigkeiten und Gasen umfassend mindestens ein Filterelement.

Filterelemente zur Abtrennung von Feststoffpartikeln aus Flüssigkeiten und Gasen zum Einbau in einen Druckbehälter in Form eines Registers, an welchem Filterelemente befestigt sind, sind bekannt. Solche Filterelemente sind vorgesehen zur Abtrennung von Feststoffen, insbesondere aus Flüssigkeiten.

EP 0 556 188 beschreibt ein Kerzenfilter, in welchem Filterkerzen mit einem zylindrischen Stützgewebe in einem Register zusammengefasst in einem Druckbehälter eingebaut sind. Das bekannte Kerzenfilter ist zum Abtrennen grosser Feststoffmengen geeignet, die Filterelemente beanspruchen jedoch bei geringen Feststoffmengen ein zu großes Volumen so, dass der Druckbehälter unnötig gross und kostspielig wird.

EP 2 283 907 A1 beschreibt eine Vorrichtung zur Filtration von Flüssigkeiten mit einem Filterelement in Form einer Kartusche, welche mit einer Kunststofffolie dichtend umhüllt ist und in einem Stützbehälter betrieben wird. Durch die begrenzte Grösse der Filtrationsfläche wird diese Art der Filtration für Suspensionen mit kleinem Feststoffgehalt verwendet.

In CA646598A ist eine Filterblattkonstruktion und ihre Anwendung in verschiedenen Arten von Filtervorrichtungen offenbart.

EP 2 736 619 B1 beschreibt eine Vorrichtung zur Abtrennung von Feststoffpartikeln aus Flüssigkeiten mittels flachen Filterelementen, angeordnet in einem oder mehreren horizontalen Aufhängeregistern, wobei die Filterelemente aus einem im wesentlichen flachen Stützgitter und einem rundum geschlossenen Filtermedium bestehen, und zwischen den Filterelementen hängende Distanzhalter angeordnet sind. Aufgrund der Distanzhalter sind die Filterelemente in genügend grosser Distanz zueinander angeordnet, damit die Filterkuchen nach dem Rückspülen bei der Reinigung der Filterelemente nicht aneinander kleben und die Reinigung verhindern. Die Distanzhalter beanspruchen ein grosses Volumen und grosse Druckbehälter.

Die gezeigten Lösungen aus dem Stand der Technik erlauben eine Abtrennung von Feststoffen aus Flüssigkeiten und Gasen in relativ grossen Druckbehältern. Nachteilig am Stand der Technik ist, dass sich die Filterelemente, insbesondere die Filterhüllen, beim Rückspülen bei der Reinigung aufblähen und die Gefahr besteht, dass sich die an den Filterelementen haftenden Filterkuchen verkleben, wodurch eine Reinigung verhindert wird. Um dies zu verhindern, werden grosse Druckbehälter verwendet, welche viel Platz beanspruchen und teuer sind.

### Aufgabe der Erfindung

Aufgabe der Erfindung ist es, Filterelemente zur Abtrennung von Feststoffen aus Flüssigkeiten und Gasen zu schaffen, welche die erwähnten Nachteile beseitigen, bei welchen sich die Filterhüllen bei der Rückspülung nicht derart aufblähen, dass die Funktion der Filterhüllen gestört ist, das heisst, dass die Filterkuchen nicht gegeneinander gepresst werden und verkleben, oder die Filterelemente nicht verbiegen. Diese Filterelemente haben den Vorteil, dass sie in kleinem Abstand in einer Vorrichtung angeordnet werden können, ohne dass sich die an den Filterhüllen haftenden Filterkuchen bei der Filtration berühren. Dadurch ist eine Reinigung der Filterelemente durch Rückspülung möglich.

### Beschreibung der Erfindung

Diese Aufgabe wird durch ein erfindungsgemässes Filterelement gelöst. Es wird ein Filterelement zur Abtrennung von Feststoffen aus Flüssigkeiten oder Gasen offenbart, wobei das Filterelement eine erste perforierte Platte und eine zweite perforierte Platte aufweist, wobei die beiden perforierten Platten parallel zueinander angeordnet sind und von einer Filterhülle umhüllt sind. Die beiden perforierten Platten sind relativ zueinander in Längsrichtung von einem nicht verschobenen Zustand in einen verschobenen Zustand verschiebbar und weisen auf den einander zugewandten Innenseiten Abstandhalter auf, welche keilförmig ausgebildet sind, und je eine schräge Seitenfläche aufweisen, wobei die schräge Seitenfläche der ersten Platte und die schräge Seitenfläche der zweiten Platte zueinander gerichtet sind und parallel zueinander verlaufen, derart dass der Abstand zwischen den Platten im verschobenen Zustand grösser ist als im nicht verschobenen Zustand, und die Filterhülle im verschobenen Zustand der Platten gespannt ist. Zusätzlich ist ein Befestigungsmechanismus vorgesehen, welches die Platten im verschobenen Zustand zueinander fixiert.

Die erfindungsgemässe Vorrichtung ermöglicht die Rückspülung der Filterelemente, ohne dass sich die Filterhüllen bei der Rückspülung wesentlich aufblähen. Durch das Verschieben der Platten relativ zueinander wird der Abstand zwischen den Platten vergrössert und die Filterhülle gespannt, so dass sich keine wesentlichen Bäuche bilden bei der Rückspülung, welche die Funktion der Filterelemente stören können.

Die erste und zweite perforierte Platte der Filterelemente umfasst über die ganze Fläche der Platten Öffnungen, vorzugsweise in Form von Löchern, welche den Durchfluss des Filtrats ermöglichen. Die Löcher sind vorzugsweise in regelmässigem Abstand zueinander angeordnet. Die Platten sind aus einem harten Material, beispielsweise aus rostfreiem Stahl oder Hartkunststoff hergestellt. Vorzugsweise sind die Platten aus einem rostfreien Stahl hergestellt. Der Hartkunststoff kann beispielsweise ein Thermoplast oder Duroplast wie Vinylesterharz oder Epoxidharz sein. Die Kunststoffe können auch mit Fasern wie beispielsweise Glasfasern verstärkt sein.

Die erste Platte weist vorzugsweise eine Verlängerung mit einem Loch zur Aufnahme eines Filtratablaufrohrs auf. Die Verlängerung weist vorzugsweise zwei flache, parallel zueinander angeordnete Platten auf, welche in einem Abstand zueinander angeordnet sind, wobei die Verlängerung auf drei Seiten abgeschlossen und auf einer Seite offen ist und somit einen Hohlraum bildet. Der Hohlraum ist über die vierte offene Seite der Verlängerung mit dem Zwischenraum zwischen der ersten und zweiten perforierten Platte verbunden. Das Loch in der Verlängerung ist vorzugsweise über eine Abdichtung, vorzugsweise über einen Abdichtungsring, abgedichtet, welcher die beiden Platten der Verlängerung und das Filtratablaufrohr zueinander abdichtet. Die Abdichtung weist Abflusslöcher auf, durch welche das Filtrat aus dem Zwischenraum zwischen der ersten und zweiten perforierten Platte über die Verlängerung der ersten Platte in das Filtratablaufrohr abfliessen kann. Das Filtratablaufrohr weist ebenfalls Abflusslöcher auf, welche mit den Abflusslöchern der Abdichtung übereinstimmen, um einen hindernisfreien Filtratabfluss zu ermöglichen.

Die zweite perforierte Platte weist vorzugsweise auf der einen Querseite, welche auf der Seite des Filtratabflusses angeordnet ist, einen Anschlag mit einer vorzugsweise abgerundeten Einbuchtung auf, wobei der Anschlag in die offene Seite der Verlängerung der ersten Platte schiebbar ist. Die abgerundete Einbuchtung schlägt im verschobenen Zustand der beiden Platten vorzugsweise am Abdichtungsring der ersten Platte an und fixiert diese in der gewünschten Position. Auf der dem Filtratabfluss und dem Anschlag gegenüberliegenden Querseite weist die zweite Platte vorzugsweise eine Abschlussleiste mit vorzugsweise einer Bohrung auf. Die Abschlussleiste dient zum Abschliessen der beiden Platten im verschobenen Zustand, und die Bohrung dient zur Aufnahme eines Verschiebemechanismus, beispielsweise einer Schraube, zum Verschieben und Einrasten der beiden Platten in einem gewünschten verschobenen Zustand. Das Verschieben kann auch manuell, beispielsweise über einen Verlängerungsstab, erfolgen.

Die erste und zweite perforierte Platte weisen vorzugsweise auf beiden Längsseiten eine Führungsschiene auf, welche einerseits die beiden Platten seitlich verschliessen und einen Hohlraum bilden, und andererseits dazu dienen, die Platten bei der Verschiebung relativ zueinander in Längsrichtung von einem nicht verschobenen Zustand in einen verschobenen Zustand zu führen und in Position zu halten.

Die Filterhülle ist vorzugsweise aus einem Gewebe, Vlies, Filz oder einer Membran, vorzugsweise aus Kunststoff oder rostfreiem Stahl hergestellt. In einer bevorzugten Ausführungsform ist die Filterhülle aus einem Kunststoffgewebe. Bei der Anwendung wird das Filterelement in die vorzugsweise schlauchförmige Filterhülle geschoben, und die Filterhülle oben und unten verschlossen, beispielsweise durch Verschweissen oder mit einer Klemmvorrichtung. Das Material der Filterhülle ist derart ausgebildet, dass es für Flüssigkeiten und Gase durchlässig ist, und gleichzeitig für Feststoffe undurchlässig ist. Dadurch werden die Feststoffe bei der Filtration an der Filterhüllenoberfläche zurückgehalten und bilden einen Filterkuchen, während die Flüssigkeiten oder Gase in den Zwischenraum zwischen den beiden Platten fliessen und von dort als Filtrat über das Filtratablaufrohr abfliessen. Im verschobenen Zustand der beiden perforierten Platten ist die Filterhülle gespannt, das heisst, die Filterhülle liegt straff um die beiden perforierten Platten. Dies bringt den Vorteil, dass sich die Filterhülle bei der Rückspülung der Filterelemente weniger aufbläht als bei herkömmlichen Filterelementen mit Filterhüllen.

Die Abstandhalter der beiden Platten sind vorzugsweise als Einbuchtungen ausgebildet, welche in Richtung der einander zugewandten Innenseiten der Platten ausgerichtet sind. Die Abstandhalter sind im Wesentlichen keilförmig ausgebildet. Sie weisen vorzugsweise eine Spitze und eine schräge Seitenfläche auf, wobei die schräge Seitenfläche der ersten Platte und die schräge Seitenfläche der zweiten Platte zueinander gerichtet sind und parallel zueinander verlaufen. In einer besonders bevorzugten Ausführungsform ist die Spitze der keilförmigen Abstandhalter abgeflacht.

Vorzugsweise weist der keilförmige Abstandhalter einen tropfenförmigen oder rechteckigen Querschnitt beziehungsweise Grundriss auf, wobei als Querschnitt die Schnittebene waagrecht zur Ebene der Platte verstanden wird. In einer besonders bevorzugten Ausführungsform weist der keilförmige Abstandhalter einen tropfenförmigen Querschnitt oder Grundriss auf. Der rechteckige Abstandhalter weist vorzugsweise einen L-förmigen Längsschnitt auf.

Vorzugsweise sind die Spitzen der keilförmigen Abstandhalter der beiden perforierten Platten im nicht verschobenen Zustand versetzt zueinander angeordnet, und im verschobenen Zustand liegen sie vorzugsweise in Kontakt zueinander aufeinander. Beim Verschieben der beiden perforierten Platten relativ zueinander in Längsrichtung von einem nicht verschobenen Zustand in einen verschobenen Zustand gleiten die schrägen Seitenflächen der keilförmigen Abstandhalter aneinander entlang, wodurch sich der Abstand zwischen den beiden Platten vergrössert, bis die Spitzen der beiden Abstandhalter aufeinander liegen und der Maximalabstand zwischen den beiden Platten erreicht ist.

Unter Befestigungsmechanismus wird ein Mechanismus verstanden, welcher im verschobenen Zustand der beiden perforierten Platten des Filterelements in einer Position einrastet, derart, dass ein fixer Abstand zwischen den zwei Platten besteht und aufrecht erhalten bleibt. Der Befestigungsmechanismus fixiert die beiden Platten im verschobenen Zustand zueinander.

Vorzugsweise ist der Befestigungsmechanismus ein Schraubmechanismus, welcher an einer Querseite der perforierten Platten angeordnet ist. Vorzugsweise wird der Befestigungsmechanismus durch einen Gewindeblock und eine Schraube gebildet, wobei der Gewindeblock vorzugsweise über einen Blechstreifen an der ersten perforierten Platte befestigt ist, und wobei die Schraube durch eine Bohrung in einer Abschlussleiste an der, einem Filtratablaufrohr gegenüberliegenden, Querseite der zweiten perforierten Platte geführt ist. Dabei rastet die Schraube an einer bestimmten Position ein, derart, dass die beiden Platten im verschobenen Zustand in einem gewünschten Abstand zueinander fixiert sind.

Ein weiterer Gegenstand der vorliegenden Erfindung betrifft eine Vorrichtung zur Abtrennung von Feststoffen aus Flüssigkeiten oder Gasen umfassend einen Druckbehälter, ein Filtratablaufrohr, und mindestens ein am Filtratablaufrohr angeordnetes erfindungsgemässes Filterelement. Vorzugsweise ist das mindestens eine Filterelement hängend am Filtratablaufrohr angeordnet ist. Vorzugsweise umfasst die Vorrichtung mehrere Filterelemente, wobei die flachen Filterelemente parallel nebeneinander angeordnet zu einem Filterpaket miteinander verbunden sind, sodass eine grosse Gesamt-Filterfläche pro Volumen bereitsteht, was vorteilhaft für den Durchfluss und die Filtereffizienz der Vorrichtung ist. Zudem besteht zwischen den einzelnen Filterelementen über den Grossteil ihrer vertikalen Längserstreckung jeweils ein vorbestimmter Freiraum.

Die Vorrichtung zur Abtrennung von Feststoffen aus Flüssigkeiten oder Gasen weist in einer weiteren Ausführungsform einen Ausgang für den Feststoffaustrag auf, welcher vorzugsweise als Austragsstutzen im unteren Bereich des Druckbehälters angeordnet ist. Dies ermöglicht das einfache Austragen des abgetrennten Feststoffes, welcher sich bei der Rückspülung der Filterelemente durch das Filtratablaufrohr durch die Schwerkraft im unteren Bereich des Behälters sammelt.

Die erfindungsgemässe Vorrichtung ist in verschiedenen Varianten realisierbar, wobei sich diese vor allem in der Anordnung der Anschlüsse und des Verschlussmechanismus unterscheiden. Je nach Anwendung ist es von Vorteil, wenn die Ein- und Ausgänge, auch Stutzen genannt, im oberen, seitlichen oder im unteren Bereich des Druckbehälters angeordnet werden können. Diese Ein- und Ausgänge am Druckbehälter erlauben das Befüllen und Entleeren des Druckbehälters mit einer Suspension, Spülflüssigkeit oder Gasen, beziehungsweise das Abfliessen des Filtrats. Diese Anschlüsse sind jeweils so abgedichtet, dass sich im Inneren des Druckbehälters eine abgedichtete Zone befindet, damit ein Überdruck oder Vakuum gebildet werden kann.

In Filtrationsprozessen, besonders in austomatisierten Filtrationsprozessen, ist es vorteilhaft, den an den Filterelementen aufgebaute abgetrennten Feststoff durch Rückspülen von den Filterelementen zu lösen. Das Rückspülen der Filterelemente kann den Aufbau einer dichten Schicht von Feststoffpartikeln an der Filterhülle verhindern und somit zu erhöhtem Filtratdurchfluss führen. Bei herkömmlichen Filterelementen mit Filterhüllen besteht der Nachteil, dass sich bei der Rückspülung die Filterhülle aufbläht und sich die Filterkuchen berühren. Das ist nicht gewünscht. Die Lösung besteht bisher darin, dass die flächigen Filterelementen in genügend grossem Abstand zueinander angeordnet werden, um eine verbesserte Rückspülung und Ablösung der Feststoffpartikel von den Filterelementen zu ermöglichen. Dies führt entweder zu weniger Filterelementen pro Druckbehälter und somit zu weniger Filtrationseffizienz, oder es braucht grössere Druckbehälter. Die erfindungsgemässen Filterelemente ermöglichen eine Rückspülung ohne dass sich die Filterhüllen wesentlich aufblähen. Somit können mehr Filterelemente in einem Druckbehälter eingesetzt werden und die Filtrationseffizienz wird gesteigert.

Zusätzlich umfasst die vorliegende Erfindung eine Anwendung eines erfindungsgemässen Filterelements in einer Vorrichtung zur Abtrennung von Feststoffen aus Flüssigkeiten oder Gasen.

Kombinationen von zwei oder mehreren der oben aufgeführten Ausführungen und Varianten sind denkbar und beansprucht.

Weitere Vorteile der Erfindung folgen aus der nachfolgenden Beschreibung, in welcher die Erfindung anhand den in den schematischen Zeichnungen dargestellten Ausführungsbeispielen näher erläutert wird.

### Kurze Beschreibung der Figuren

Es zeigen:
- Fig. 1: die erste perforierte Platte in einer perspektivischen Ansicht auf die Innenseite der Platte,
- Fig. 2: die zweite perforierte Platte in einer perspektivischen Ansicht auf die Aussenseite der Platte,
- Fig. 3A: das Filterelement in einer perspektivischen Ansicht mit einer Teilansicht auf einen Querschnitt durch die ersten und zweite Platte,
- Fig. 3B: einen Ausschnitt des Filterelements in einer perspektivischen Ansicht auf einen Querschnitt durch die ersten und zweite Platte,
- Fig. 4: einen Ausschnitt auf den oberen Teil des Filterelements in einer perspektivischen Ansicht,
- Fig. 5: einen Ausschnitt der ersten und zweiten perforierten Platte in perspektivischer Ansicht,
- Fig. 6A: einen Ausschnitt einer perspektivischen Ansicht auf einen Querschnitt durch die erste und zweite perforierte Platte im nicht verschobenen Zustand,
- Fig. 6B: einen Querschnitt durch die erste und zweite perforierte Platte im nicht verschobenen Zustand,
- Fig. 7A: einen Ausschnitt einer perspektivischen Ansicht auf einen Querschnitt durch die erste und zweite perforierte Platte im verschobenen Zustand,
- Fig. 7B: einen Querschnitt durch die erste und zweite perforierte Platte im verschobenen Zustand,
- Fig. 8: einen Ausschnitt einer perspektivischen Ansicht auf einen Querschnitt durch die erste und zweite perforierte Platte mit Befestigungsmechanismus,
- Fig. 9: einen Ausschnitt einer perspektivischen Ansicht auf einen Querschnitt durch eine weitere Variante einer ersten und zweiten perforierten Platte, und
- Fig. 10: eine perspektivische Ansicht auf einen Druckbehälter mit Filterelementen.

### Ausführungsbeispiele der Erfindung

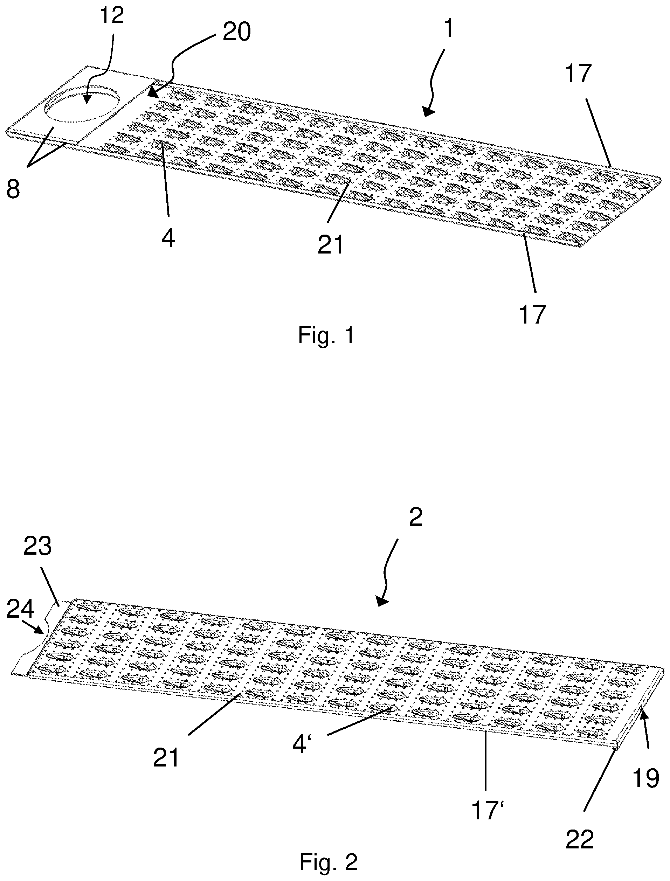

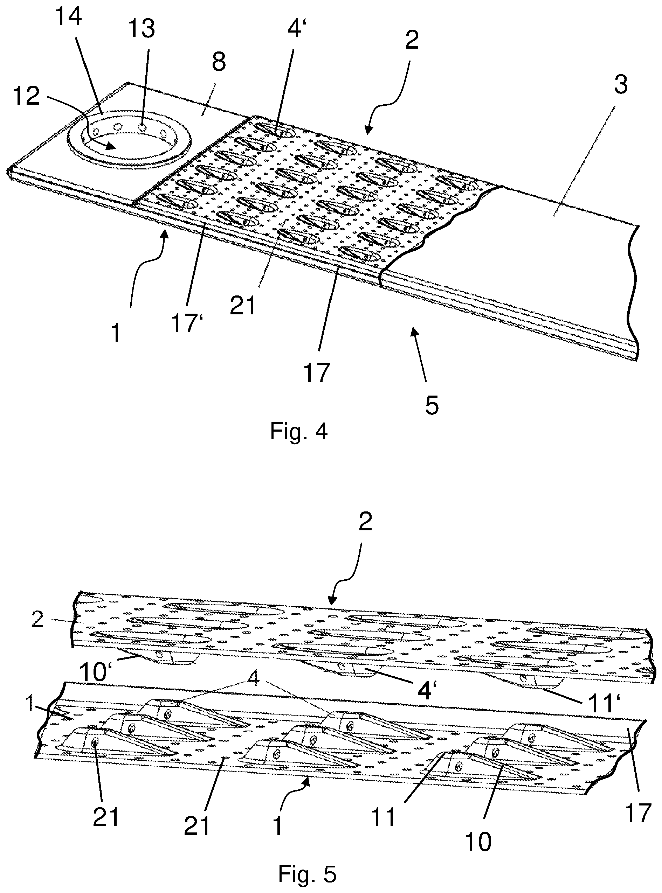

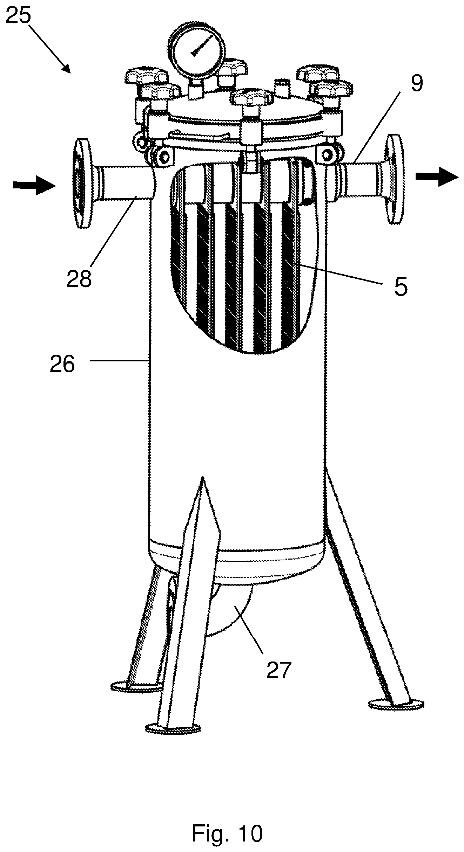

In der Figur 1 ist die erste perforierte Platte 1 dargestellt in perspektivischer Ansicht auf die Innenseite der Platte 1. Die erste perforierte Platte 1 weist über den Grossteil der Fläche verteilt Öffnungen 21 in Form von Löchern auf, welche den Durchfluss des Filtrats ermöglichen. Die Platte 1 ist vorzugsweise aus einem rostfreien Stahl hergestellt und weist auf den beiden Längsseiten Führungsschienen 17 auf. Die erste perforierte Platte weist mehrere Abstandhalter 4 auf, welche in regelmässigen Abständen zueinander angeordnet sind und jeweils dieselbe Form aufweisen. In Figur 1 sind die Abstandhalter 4 im Wesentlichen keilförmig und in Tropfenform ausgebildet mit einer abgeflachten Spitze und einer schrägen Seitenfläche. Dabei weist die Platte 1 pro Reihe sechs Abstandhalter 4 auf und die ganze Platte weist je nach Länge der Platte eine unterschiedliche Anzahl Reihen auf. In dieser Ausführungsform weist die Platte vierzehn Reihen mit je sechs Abstandhaltern 4 auf. Die erste perforierte Platte 1 weist zusätzlich eine Verlängerung 8 mit einem Loch 12 zur Aufnahme eines Filtratablaufrohrs (9, in Figur 10 dargestellt) auf. Die Verlängerung 8 weist zwei flache, parallel zueinander angeordnete Platten auf, welche in einem Abstand zueinander angeordnet sind. Die Verlängerung 8 ist auf drei Seiten geschlossen und auf einer Seite offen und bildet somit einen Hohlraum. Der Hohlraum ist über die vierte offene Seite 20 der Verlängerung mit dem Zwischenraum zwischen der ersten und zweiten perforierten Platte verbunden (nicht dargestellt). Das Loch 12 wird über einen Abdichtungsring 14 (in Figur 4 dargestellt) abgedichtet.

In der Figur 2 ist die zweite perforierte Platte 2 dargestellt in perspektivischer Ansicht auf die Aussenseite der zweiten Platte 2. Wie die erste Platte 1 (in Figur 1 dargestellt) weist die zweite Platte 2 über den Grossteil der Fläche verteilt Öffnungen 21 in Form von Löchern auf, welche den Durchfluss des Filtrats ermöglichen. Die Platte 2 ist vorzugsweise aus einem rostfreien Stahl hergestellt und weist auf den beiden Längsseiten Führungsschienen 17' auf. Die zweite perforierte Platte 2 weist mehrere Abstandhalter 4' auf, welche in regelmässigen Abständen zueinander angeordnet sind und jeweils dieselbe Form aufweisen. In Figur 2 sind die Abstandhalter 4' im Wesentlichen keilförmig und in Tropfenform ausgebildet mit einer abgeflachten Spitze und einer schrägen Seitenfläche. Dabei weist die Platte 2 pro Reihe sechs Abstandhalter 4' auf und die ganze Platte weist je nach Länge der Platte eine unterschiedliche Anzahl Reihen auf. In dieser Ausführungsform weist die Platte 2 vierzehn Reihen mit sechs Abstandhaltern 4' auf. Die zweite perforierte Platte 2 weist zusätzlich auf der einen Querseite, welche auf der Seite des Filtratabflusses angeordnet ist, einen Anschlag 23 mit einer abgerundeten Einbuchtung 24 auf, wobei der Anschlag 23 in die offene Seite 20 der Verlängerung 8 der ersten Platte 1 (in Figur 1 dargestellt) schiebbar ist und die abgerundete Einbuchtung 24 im verschobenen Zustand der beiden Platten am Abdichtungsring 14 (in Figur 4 dargestellt) der ersten Platte anschlägt und somit fixiert. Auf der dem Filtratabfluss und dem Anschlag 23 gegenüberliegenden Querseite weist die zweite Platte 2 eine Abschlussleiste 22 mit einer Bohrung 19 auf. Die Abschlussleiste 22 dient zum Abschliessen der beiden Platten im verschobenen Zustand, und die Bohrung 19 dient zur Aufnahme einer Schraube zum Verschieben und Einrasten der beiden Platten in einem gewünschten verschobenen Zustand.

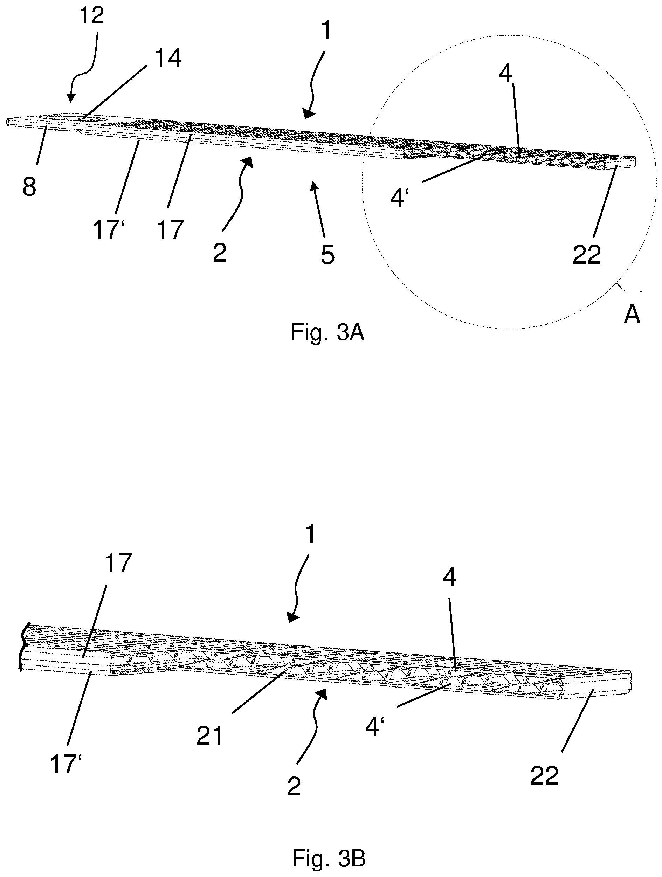

Figur 3A zeigt ein Filterelement 5 mit einer ersten perforierten Platte 1 und einer zweiten perforierten Platte 2 in perspektivischer Ansicht von schräg oben auf die Aussenseite der ersten perforierten Platte 1 sowie mit einer Teilansicht A auf einen Querschnitt durch die erste 1 und zweite Platte 2. Von der ersten perforierten Platte 1 sind die Abstandhalter 4, eine von zwei Führungsschienen 17, sowie die Verlängerung 8 mit dem Loch 12 und dem Abdichtungsring 14 dargestellt. Von der zweiten perforierten Platte 2 sind die Abstandhalter 4', eine von zwei Führungsschienen 17', sowie die Abschlussleiste 22 dargestellt.

In der Figur 3B ist der Teilausschnitt A aus Figur 3A dargestellt mit der Ansicht auf den Querschnitt durch die beiden Platten 1, 2 im verschobenen Zustand. Dabei sind die Führungsschiene 17 und die Abstandhalter 4 der ersten Platte 1 sowie die Führungsschiene 17', die Abstandhalter 4' und die Abschlussleiste 22 der zweiten Platte 2 dargestellt. Die Abstandhalter 4 und 4' weisen Öffnungen 21 in Form von Löchern für den Durchfluss des Filtrats auf. Die Spitzen der keilförmigen Abstandhalter 4 und 4' sind abgeflacht und liegen in Kontakt zueinander aufeinander.

Figur 4 zeigt einen Ausschnitt auf den oberen Teil eines Filterelements 5 in einer perspektivischen Ansicht mit der ersten Platte 1, der zweiten Platte und der Filterhülle 3. In dieser Ansicht ist die erste Platte 1 mit der Führungsschiene 17, der Verlängerung 8 mit einem Loch 12, dem Abdichtungsring 14 und den Abflusslöchern 13 dargestellt. Das Loch 12 in der Verlängerung 8 ist über einen Abdichtungsring 12 abgedichtet, welcher die beiden Platten der Verlängerung 8 und das Filtratablaufrohr (nicht dargestellt) zueinander abdichtet. Der Abdichtungsring 14 weist Abflusslöcher 13 auf, durch welche das Filtrat aus dem Zwischenraum zwischen der ersten und zweiten perforierten Platte 1, 2 über die Verlängerung 8 der ersten Platte in das Filtratablaufrohr (nicht dargestellt) abfliessen kann. Das Filtratablaufrohr (nicht dargestellt) weist ebenfalls Abflusslöcher auf, welche mit den Abflusslöchern des Abdichtungsrings übereinstimmen, um einen hindernisfreien Filtratabfluss zu ermöglichen. Von der zweiten perforierten Platte 2 sind in dieser Ansicht die Abstandhalter 4', die Öffnungen 21 sowie die Führungsschiene 17' dargestellt. Die Filterhülle 3 ist nur ansatzweise dargestellt. Die Filterhülle 3 umschliesst die beiden Platten 1 und 2 bei der Verwendung des Filterelements 5 im Wesentlichen vollständig. Die Filterhülle 3 ist schlauchförmig über die beiden Platten 1 und 2 gezogen, oben und unten verschlossen (nicht dargestellt) und auch um den Abdichtungsring 14 für die Aufnahme des Filtratablaufrohrs (nicht dargestellt) abgedichtet und verschlossen, so dass das Filtrat nur durch die Filterhülle in den Zwischenraum zwischen den beiden Platten und von dort über den Abdichtungsring 14 mit Abflusslöchern 13 in das Filtratablaufrohr (nicht dargestellt) fliesst.

Figur 5 zeigt einen Ausschnitt der ersten Platte 1 und der zweiten Platte 2 in der Position, bevor sie aufeinander gelegt werden. Die erste Platte 1 weist eine Führungsschiene 17, Öffnungen 21 sowie mehrere Abstandhalter 4 auf, wobei die Abstandhalter 4 eine keilförmige tropfenförmige Form aufweisen mit einer schrägen Seitenfläche 10 und einer abgeflachten Spitze 11. Die Abstandhalter 4' der zweiten Platte 2 sind ebenfalls dargestellt mit der schrägen Seitenfläche 10' und der abgeflachten Spitze 11'.

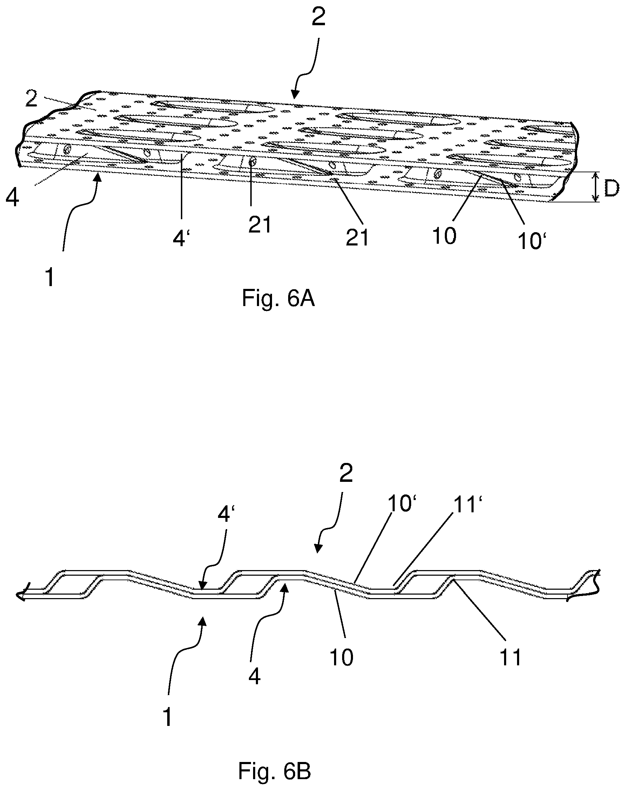

Figur 6A zeigt einen Ausschnitt einer perspektivischen Ansicht auf einen Querschnitt durch die erste perforierte Platte 1 mit den Abstandhaltern 4 mit einer schrägen Seitenfläche 10 und den Öffnungen 21 und durch die zweite perforierte Platte 2 mit den Abstandhaltern 4' mit einer schrägen Seitenfläche 10'. Figur 6A zeigt die beiden Platten 1 und 2 im nicht verschobenen Zustand. Bei der Montage werden die beiden Platten 1 und 2 aufeinander gelegt, so dass sich die Abstandhalter 4 und 4' auf der Innenseite der Platten 1, 2 einander zugewandt sind. Die beiden schrägen Seitenflächen 10 und 10' liegen parallel zueinander. Vorzugsweise berühren sie sich. Die abgerundeten Spitzen liegen vorzugsweise auf der gegenüberliegenden Platte auf, so dass sich im nicht verschobenen Zustand der Platten ein Abstand D bildet zwischen der ersten perforierten Platte 1 und der zweiten perforierten Platte 2. Die Filterhülle (nicht dargestellt) wird in diesem nicht verschobenen Zustand über die Platten 1, 2 gestülpt, wobei das Gewebe nicht gespannt ist.

Figur 6B zeigt einen Querschnitt durch die erste und zweite Platte 1, 2 in derselben Anordnung wie in Figur 6A beschrieben. Die abgeflachte Spitze 11 des Abstandhalters 4 der ersten Platte 1 liegt auf der zweiten Platte 2 auf. Die abgeflachte Spitze 11' des Abstandhalters 4' der zweiten Platte 2 liegt auf der ersten Platte 1 auf. Die schräge Seitenfläche 10 des Abstandhalters 4 der ersten Platte 1 berührt die schräge Seitenfläche 10' des Abstandhalters 4' der zweiten Platte 2.

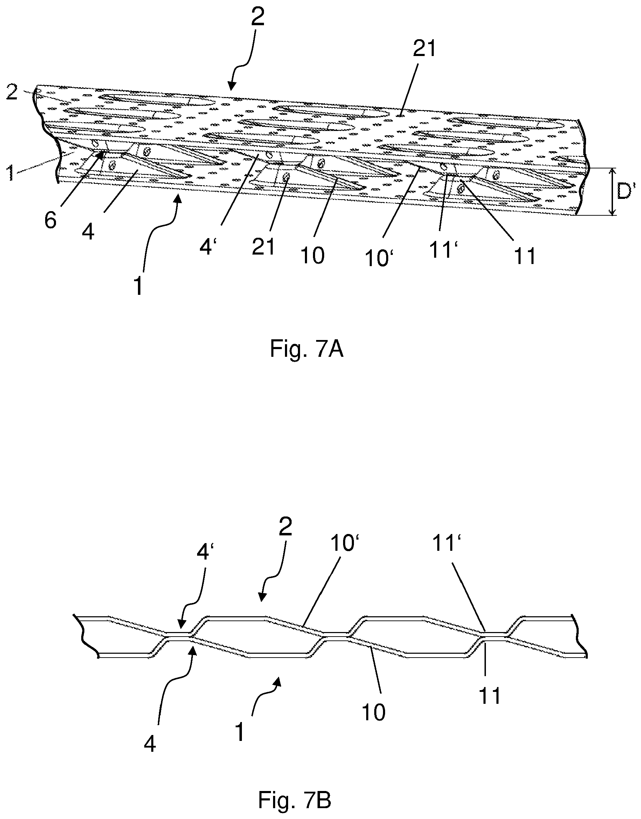

Figur 7A zeigt einen Ausschnitt einer perspektivischen Ansicht auf einen Querschnitt durch die erste perforierte Platte 1 mit den Abstandhaltern 4 mit einer schrägen Seitenfläche 10 und den Öffnungen 21 und durch die zweite perforierte Platte 2 mit den Abstandhaltern 4' mit einer schrägen Seitenfläche 10'. Figur 7A zeigt die beiden Platten 1 und 2 im verschobenen Zustand. Die aufeinanderliegenden Platten 1, 2 werden entweder manuell oder mittels eines Verschiebemechanismus, beispielsweise einer Schraube, in einen verschobenen Zustand verschoben, indem die schrägen Seitenflächen 10, 10' aneinander entlang gleiten, bis die abgeflachten Spitzen 11, 11' aufeinander liegen und sich die beiden Platten 1, 2 in einem Abstand D' zueinander befinden. Der Abstand D' ist grösser als der Abstand D der Platten im nicht verschobenen Zustand, wie in Figur 6A beschrieben. Durch den vergrösserten Abstand zwischen den zwei Platten ist die Filterhülle (nicht dargestellt) gespannt. Vorzugsweise ist der Umfang der Filterhülle durch die beiden Platten vollständig ausgefüllt. Das Gewebe der Filterhülle ist derart gespannt, dass sich die Filterhülle bei der Rückspülung kaum aufbläht, so dass die Funktion der Filterelemente nicht gestört ist.

Figur 7B zeigt einen Querschnitt durch die erste und zweite Platte 1, 2 in derselben Anordnung wie in Figur 7A beschrieben. Die abgeflachten Spitzen 11 der Abstandhalter 4 der ersten Platte 1 liegen auf den abgeflachten Spitzen 11' der Abstandhalter 4' der zweiten Platte 2 auf.

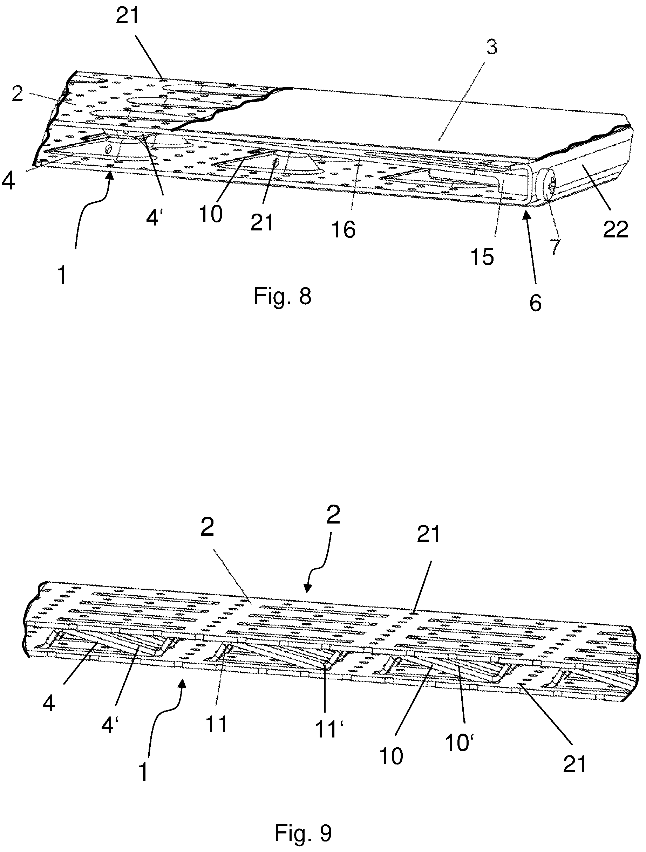

Figur 8 zeigt einen Ausschnitt einer perspektivischen Ansicht auf einen Querschnitt durch den Befestigungsmechanismus 6 der ersten und zweiten Platte 1, 2 im verschobenen Zustand. Der Befestigungsmechanismus 6 ist ein Schraubmechanismus und wir durch einen Gewindeblock 15 und eine Schraube 7 gebildet. Der Gewindeblock 15 ist über einen Blechstreifen 16 an der ersten perforierten Platte 1 befestigt. Die Schraube 16 ist durch die Bohrung 19 (in Figur 2 dargestellt) in der Abschlussleiste 22 geführt, wobei die Abschlussleiste an der, dem Filtratabfluss gegenüberliegenden Querseite der zweiten perforierten Platte 2 angeordnet ist. Im nicht verschobenen Zustand des Filterelements wird die Schraube 7 durch die Bohrung in den Gewindeblock 15 geführt und die Schraube angezogen, wodurch sich die erste Platte 1 verschiebt, bis die abgeflachten Spitzen der Abstandhalter aufeinander liegen und der Abstand zwischen den beiden Platten grösser ist als im nicht verschobenen Zustand. Die Filterhülle 3 ist in dieser Darstellung nur ansatzweise gezeigt.

Figur 9 zeigt einen Ausschnitt einer perspektivischen Ansicht auf einen Querschnitt durch eine weitere Variante der ersten und zweiten perforierten Platte 1, 2 im nicht verschobenen Zustand. Die erste Platte 1 weist Abstandhalter 4 mit einer schrägen Seitenfläche 10 und einer Spitze 11 auf, und die zweite Platte 2 weist Abstandhalter 4' mit einer schrägen Seitenfläche 10' und einer Spitze 11' auf. Zudem weisen die beiden Platten Öffnungen 21 auf. Die Abstandhalter weisen einen rechteckigen Querschnitt und einen L-förmigen Längsschnitt auf. Die Spitze 11, 11' der Abstandhalter 4, 4' ist nicht abgeflacht.

Figur 10 zeigt eine Vorrichtung 25 mit einem Druckbehälter 26, Filterelementen 5 (hier ohne Filterhülle dargestellt), einem Eingangsanschluss 28 durch welchen die zu filtrierende Flüssigkeit oder das zu filtrierende Gas in den Druckbehälter 26 fliesst (Pfeilrichtung), einem Filtratablaufrohr 9 durch welches das Filtrat abfliesst (Pfeilrichtung), und einem Austragsstutzen 27 für den Feststoffaustrag. Die Vorrichtung 25 weist weitere Elemente wie ein Druckbehälterdeckel mit Verschlussschrauben, Druckanzeige und Standfüsse auf.

Der Filtrationsprozess erfolgt derart, dass der Druckbehälter 26 über den Eingangsanschluss 28 mit Suspension oder Gas befüllt wird. Dazu wird die im Druckbehälter 26 befindliche Atmosphäre, beispielsweise Luft, über die Filterelemente 5 aus dem Filtratablaufrohr 9 verdrängt, und die zu filtrierende Flüssigkeit oder das zu filtrierende Gas fliesst durch die Filterhüllen 3 (nicht dargestellt) auf denen der Feststoff zurückgehalten wird, in den Zwischenraum zwischen den beiden perforierten Platten und über das Filtratablaufrohr 9 aus der Vorrichtung 25, wo das Filtrat, d.h. die filtrierte Flüssigkeit oder das filtrierte Gas gesammelt wird. Nachdem die Filtration beendet ist, wird der Feststoff durch Rückspülen mit Flüssigkeit oder Rückblasen mit Gas durch das Filtratablaufrohr (entgegen der Pfeilrichtung) von den Filterhüllen 3 (nicht dargestellt) abgelöst und gegebenenfalls aus dem Druckbehälter 26 ausgetragen. Dazu wird entweder zuerst die sich noch im Druckbehälter 26 befindende Suspension aus dem Druckbehälter 26 über den Austragsstutzen 27 entleert und anschliessend rückgespült, oder der Feststoff wird zuerst von den Filterhüllen abgelöst und anschliessend zusammen mit der restlichen Suspension über den Austragsstutzen 27 entleert.

### Bezugszeichenliste

- 1: Erste perforierte Platte
- 2: Zweite perforierte Platte
- 3: Filterhülle
- 4: Abstandhalter der ersten Platte
- 4': Abstandhalter der zweiten Platte
- 5: Filterelement
- 6: Befestigungsmechanismus
- 7: Schraube
- 8: Verlängerung
- 9: Filtratablaufrohr
- 10: Schräge Seitenfläche des Abstandhalters der ersten Platte
- 10': Schräge Seitenfläche des Abstandhalters der zweiten Platte
- 11: Spitze des Abstandhalters der ersten Platte
- 11': Spitze des Abstandhalters der zweiten Platte
- 12: Loch
- 13: Abflussloch
- 14: Abdichtungsring
- 15: Gewindeblock
- 16: Blechstreifen
- 17: Führungsschiene der ersten Platte
- 17': Führungsschiene der zweiten Platte
- 18: Austragsstutzen
- 19: Bohrung
- 20: offene Seite
- 21: Öffnung
- 22: Abschlussleiste
- 23: Anschlag
- 24: Einbuchtung
- 25: Vorrichtung
- 26: Druckbehälter
- 27: Austragsstutzen
- 28: Eingangsrohr

## Patentansprüche

1. Filterelement (5) zur Abtrennung von Feststoffen aus Flüssigkeiten oder Gasen, wobei das Filterelement (5) eine erste perforierte Platte (1) und eine zweite perforierte Platte (2) aufweist, wobei die beiden perforierten Platten (1, 2) parallel zueinander angeordnet sind und von einer Filterhülle (3) umhüllt sind, **dadurch gekennzeichnet, dass** die beiden perforierten Platten (1, 2) relativ zueinander in Längsrichtung von einem nicht verschobenen Zustand in einen verschobenen Zustand verschiebbar sind und die Platten (1, 2) auf den einander zugewandten Innenseiten Abstandhalter (4, 4') aufweisen, welche keilförmig ausgebildet sind und je eine schräge Seitenfläche (10, 10') aufweisen, wobei die schräge Seitenfläche (10) der ersten Platte (1) und die schräge Seitenfläche (10') der zweiten Platte (2) zueinander gerichtet sind und parallel zueinander verlaufen, derart dass der Abstand (D') zwischen den Platten (1, 2) im verschobenen Zustand grösser ist als im nicht verschobenen Zustand (D) und die Filterhülle (3) im verschobenen Zustand der Platten (1, 2) gespannt ist, und wobei mindestens ein Befestigungsmechanismus (6) vorgesehen ist, welcher die Platten (1, 2) im verschobenen Zustand zueinander fixiert.

2. Filterelement (5) nach Anspruch 1, **dadurch gekennzeichnet, dass** die keilförmigen Abstandhalter (4, 4') je eine Spitze (11, 11') aufweisen.

3. Filterelement (5) nach Anspruch 2, **dadurch gekennzeichnet, dass** die Spitze (11, 11') der keilförmigen Abstandhalter (4, 4') abgeflacht ist.

4. Filterelement (5) nach einem der vorhergehenden Ansprüche, **dadurch gekennzeichnet, dass** die keilförmigen Abstandhalter (4, 4') einen tropfenförmigen oder rechteckigen Querschnitt aufweisen.

5. Filterelement (5) nach einem der Ansprüche 2 bis 4, **dadurch gekennzeichnet, dass** die Spitzen (11, 11') der keilförmigen Abstandhalter (4) der beiden perforierten Platten (1, 2) im nicht verschobenen Zustand versetzt zueinander angeordnet sind, und dass die Spitzen (11, 11') der keilförmigen Abstandhalter (4) der beiden perforierten Platten (1, 2) im verschobenen Zustand in Kontakt zueinander aufeinander liegen.

6. Filterelement (5) nach einem der Ansprüche 1 bis 5, **dadurch gekennzeichnet, dass** der Befestigungsmechanismus (6) von einem Schraubmechanismus gebildet ist, welcher eine Schraube (7) und einen Gewindeblock (15) umfasst, und an einer Querseite der perforierten Platten (1, 2) angeordnet ist.

7. Filterelement (5) nach einem der vorhergehenden Ansprüche, **dadurch gekennzeichnet, dass** die erste perforierte Platte (1) eine Verlängerung (8) mit einem Loch (12) zur Aufnahme eines Filtratablaufrohrs (9) aufweist.

8. Vorrichtung (25) zur Abtrennung von Feststoffen aus Flüssigkeiten oder Gasen umfassend einen Druckbehälter (26), ein Filtratablaufrohr (9), und mindestens ein am Filtratablaufrohr (9) angeordnetes Filterelement (5) nach einem der vorhergehenden Ansprüche.

9. Anwendung des Filterelements (5) nach einem der Ansprüche 1 bis 7 in einer Vorrichtung (25) zur Abtrennung von Feststoffen aus Flüssigkeiten oder Gasen.

## Claims

1. Filter element (5) for the separation of solids from liquids or gases, wherein the filter element (5) comprises a first perforated plate (1) and a second perforated plate (2), wherein the two perforated plates (1, 2) are arranged parallel to each other and are enclosed by a filter shell (3), **characterized in that** the two perforated plates (1, 2) can be moved relative to each other in the longitudinal direction from a non-shifted state to a shifted state and the plates (1, 2) have spacers (4, 4') on the inner sides facing each other, which are wedge-shaped and each have a sloping side surface (10, 10'), wherein the sloping side surface (10) of the first plate (1) and the sloping side surface (10') of the second plate (2) are directed towards each other and run parallel to each other, so that the distance (D') between the plates (1, 2) is larger in the shifted state than in the non-shifted state (D) and the filter shell (3) is tensioned in the shifted state of the plates (1, 2), and wherein at least one fastening mechanism (6) is provided which fixes the plates (1, 2) to each other in the shifted state.

2. Filter element (5) according to claim 1, **characterized in that** the wedge-shaped spacers (4, 4') each have a tip (11, 11').

3. Filter element (5) according to claim 2, **characterized in that** the tip (11, 11') of the wedge-shaped spacers (4, 4') is flattened.

4. Filter element (5) according to any one of the preceding claims, **characterized in that** the wedge-shaped spacers (4, 4') have a drop-shaped or rectangular cross-section.

5. A filter element (5) according to any one of claims 2 to 4, **characterized in that** the tips (11, 11') of the wedge-shaped spacers (4) of the two perforated plates (1, 2) are arranged offset from each other in the non-shifted state, and that the tips (11, 11') of the wedge-shaped spacers (4) of the two perforated plates (1, 2) are in contact with each other in the shifted state.

6. A filter element (5) according to any one of claims 1 to 5, **characterized in that** the fastening mechanism (6) is formed by a screw mechanism comprising a screw (7) and a threaded block (15) and is arranged on a transverse side of the perforated plates (1, 2).

7. A filter element (5) according to any one of the preceding claims, **characterized in that** the first perforated plate (1) has an extension (8) with a hole (12) for accommodating a filtrate drain pipe (9).

8. Device (25) for separating solids from liquids or gases comprising a pressure vessel (26), a filtrate drain pipe (9), and at least one filter element (5) arranged on the filtrate drain pipe (9) according to any of the preceding claims.

9. Application of the filter element (5) according to any one of claims 1 to 7 in a device (25) for the separation of solids from liquids or gases.

## Revendications

1. Elément filtrant (5) pour la séparation de solides de liquides ou de gaz, dans lequel l'élément filtrant (5) comprend une première plaque perforée (1) et une seconde plaque perforée (2), dans laquelle les deux plaques perforées (1, 2) sont disposées parallèlement l'une à l'autre et sont enfermées dans une enveloppe du filtre (3), **caractérisée en ce que** les deux plaques perforées (1, 2) sont déplacées l'une par rapport à l'autre dans le sens longitudinal d'un état non déplacé à un état déplacé et les plaques (1, 2) ont des entretoises (4, 4') sur les côtés intérieurs qui se font face, qui sont cunéiformes et ont chacune une surface latérale inclinée (10, 10'), dans laquelle la surface latérale inclinée (10) de la première plaque (1) et la surface latérale inclinée (10') de la deuxième plaque (2) sont dirigées l'une vers l'autre et sont parallèles l'une à l'autre, de sorte que la distance (D') entre les plaques (1, 2) est plus grande à l'état déplacé qu'à l'état non déplacé (D) et l'enveloppe du filtre (3) est tendue à l'état déplacé des plaques (1, 2), et dans lequel au moins un mécanisme de fixation (6) est prévu qui fixe les plaques (1, 2) les unes aux autres à l'état déplacé.

2. Elément filtrant (5) selon la revendication 1, **caractérisé en ce que** les entretoises cunéiformes (4, 4') ont chacune une pointe (11, 11').

3. Elément filtrant (5) selon la revendication 2, **caractérisé en ce que** la pointe (11, 11') des entretoises cunéiformes (4, 4') est aplatie.

4. Elément filtrant (5) selon l'une quelconque des revendications précédentes, **caractérisé en ce que** les entretoises cunéiformes (4, 4') ont une section transversale en forme de goutte d'eau ou rectangulaire.

5. Elément filtrant (5) selon l'une quelconque des revendications 2 à 4, **caractérisé en ce que** les pointes (11, 11') des entretoises cunéiformes (4) des deux plaques perforées (1, 2) sont décalées l'une par rapport à l'autre à l'état non déplacé, et que les pointes (11, 11') des entretoises cunéiformes (4) des deux plaques perforées (1, 2) sont en contact l'une avec l'autre à l'état déplacé.

6. Elément filtrant (5) selon l'une quelconque des revendications 1 à 5, **caractérisé en ce que** le mécanisme de fixation (6) est formé par un mécanisme à vis comprenant une vis (7) et un bloc fileté (15) et est disposé sur un côté transversal des plaques perforées (1, 2).

7. Elément filtrant (5) selon l'une quelconque des revendications précédentes, **caractérisé en ce que** la première plaque perforée (1) présente une extension (8) avec un trou (12) pour accueillir un tuyau de drainage de filtrat (9).

8. Dispositif (25) de séparation de solides de liquides ou de gaz, comprenant un récipient sous pression (26), un tube de drainage de filtrat (9) et au moins un élément filtrant (5) disposé sur le tube de drainage de filtrat (9) selon l'une quelconque des revendications précédentes.

9. Application de l'élément filtrant (5) selon l'une quelconque des revendications 1 à 7 dans un dispositif (25) pour la séparation de solides de liquides ou de gaz.
